# EUROPÄISCHE PATENTANMELDUNG

(11) **EP 0 802 011 A2**
(43) Veröffentlichungstag der Anmeldung: **22.10.1997**
(21) Anmeldenummer: 97102924.4
(22) Anmeldetag: 22.02.1997
(51) Int. Cl.: B23K 11/06

(54) **Verfahren zum Verbinden von zwei Metallfolien**

(30) Priorität: 19.04.1996 CH 995/96
(71) Anmelder: ELPATRONIC AG, 6303 Zug (CH)
(72) Erfinder: Urech, Werner, 5466 Kaiserstuhl (CH)

(57) **Zusammenfassung**

Bei einem Verfahren zum Verbinden von zwei Metallfolien (4, 5), die zumindest teilweise, z.B. in Randbereichen, aufeinanderliegen, werden die Metallfolien (4, 5) relativ zwischen zwei Metalldrähten (11, 12) hindurch geführt, wobei jeder Metalldraht (11, 12) auf einer Folie (4, 5) abrollt und dabei mit Strom beaufschlagt wird.

## Beschreibung

Die Erfindung betrifft ein Verfahren zum Verbinden von zwei Dünnstblechen oder Metallfolien, die zumindest teilweise, z.B. im Randbereichen, aufeinanderliegen, sowie eine Vorrichtung hierfür.

Unter Dünnstblechen und Folien (in der Folge Metallfolien genannt) werden flächige, sich selbst tragende und flexible Gebilde mit Dicken zwischen 2 µm und 0,2 mm, insbesondere zwischen 20µm und 0,1 mm verstanden, die zum Beispiel aus rostfreien austenitischen oder ferritischen Werkstoffen bestehen. Diese geringe Dicke macht es schwierig, zwei Metallfolien miteinander zu verbinden. Dies gilt vor allem dann, wenn die Verbindung über eine Schweissnaht erfolgen soll.

Für das Verbinden von zwei Metallfolien, die übereinander gelegt sind, ist das Widerstands-Rollennahtschweissverfahren bekannt. Bei diesem Rollennahtschweissverfahren werden die zu verbindenden Metallfolien zwischen den beiden Rollen hindurchgeführt, wobei die Rollen mit Strom, bevorzugt mit Wechselstrom, beaufschlagt sind. Durch den Stromfluss durch die beiden Folien zwischen den beiden Schweissrollen erfolgt ein Aufschmelzen des Berührungsbereiches der beiden Metallfolien, wobei zwischen den beiden Metallfolien eine Schweissnaht gebildet wird, welche die beiden Metallfolien miteinander verbindet. Diese Schweissnaht besteht in der Regel aus einzelnen aufeinanderfolgenden Schweisslinsen, deren Grösse bei einwandfreier Schweissnaht in einem bestimmten Verhältnis zur Dicke der Metallfolie und der Nahtbreite steht. Da die Folien sehr dünn sind, kommt es aber häufig zu einem Durchschmelzen der Schweisslinsen bis zu den Blechoberflächen, wodurch die Qualität der Schweissung erheblich beeinträchtigt ist oder gänzlich unbrauchbar wird. Die Geschwindigkeit beim Rollennahtschweissen von Metallfolien liegt aus diesen Gründen unterhalb 2 m pro Minute, was für eine Grosserienproduktion ausserordentlich langsam ist, so dass die Aufwendungen für das Rollennahtschweissen von Metallfolien zu hoch und damit unwirtschaftlich sind.

Der vorliegenden Erfindung liegt die Aufgabe zugrunde, ein Verfahren zur Verbindung von Metallfolien und eine entsprechende Vorrichtung zu entwickeln, mittels welcher eine Schweissnaht qualitativ einwandfrei hergestellt werden kann, wobei die Geschwindigkeit der Erzeugung der Verbindung erheblich erhöht wird.

Die Aufgabe wird dadurch gelöst, dass zur Schweissung eine Drahtzwischenelektrode verwendet wird. Die Drahtelektrode wird um die Schweissrollen herumgeführt, derart, dass sie während dem Schweissprozess zwischen der zu verschweissenden Metallfolie und der Schweissrolle liegt. Damit gibt es keinen direkten Kontakt zwischen Folie und Schweissrolle mehr.

Das Rollennahtschweissen mit Drahtelektrode ist grundsätzlich bekannt; es findet Anwendung im Dosenschweissen, wo Dosenzargen im Dünnblechbereich mit Blechdicken zwischen 0,12 und 0,5 mm herzustellen sind. Dosenbleche besitzen aber spezielle Eigenschaften, welche verschieden sind von den erfindungsgemäss zu verbindenden Metallfolien: Dosenbleche sind mit einem metallischen Überzug versehen, im Fall von Zinn als Ueberzug liegt Weissblech vor. Zinn hat nun einen niedrigeren Schmelzpunkt als das eigentliche zu verbindende Blech, so dass es vor erreichen der Schweisstemperatur verflüssigt. Unvermeidlicherweise setzt sich deshalb Zinn auf den Rollenoberflächen der Schweissrollen ab. Durch diese Verschmutzung der Rollenoberflächen verändern sich die Schweissbedingungen (unter Anderem verändern sich Uebergangswiderstand und Kontaktfläche) in unkontrollierbarem Mass. Bei der Verwendung einer Drahtelektrode, welche vor der Schweissrolle frisch zugeführt, zwischen Rolle und Dosenblech während der Schweissung mitläuft und nach der Rolle entsorgt wird, wird die laufend auftretende Verschmutzung zugleich laufend mit entsorgt; der Schweissprozess bleibt ungestört und einwandfrei. Nachteilig ist, dass neben dem erhöhten konstruktiven Aufwand für die Schweissmaschine Draht entsprechend der Länge der produzierten Schweissnaht verbraucht wird, was bei industrieller Fertigung erhebliche Kosten mitbringt.

Für das Verbinden von Folien stand dieses erhöhte fixe und erhöhte variable Kosten verursachende Rollennahtschweissen mit Drahtzwischenelektrode bislang nicht zur Diskussion, da eine Metallfolie der beschriebenen Art einerseits keinen zusätzlichen metallischen Überzug mit einem tieferen Schmelzpunkt als der Folienwerkstoff beziehungsweise nur einen spontan gebildeten Ueberzug aufweist, welcher durch Oxidation des Folienwerkstoffs natürlich entsteht und durch Bearbeitungsprozesse in seiner Dicke beeinflussbar ist. Andererseits kann eine Metallfolie der beschriebenen Art lediglich mit einer Korrosionsschutzschicht (beispielsweise Chromoxid) belegt sein, die einen höheren Schmelzpunkt als der Werkstoff der eigentlichen Metallfolie besitzt.

Ueberraschenderweise hat es sich gezeigt, dass gerade das im Dosenbereich notwendige Schweissverfahren hervorragende Schweissnähte auch bei der Verbindung von zwei Metallfolien erzeugt, obschon die Drahtelektrode nach dem Wissen des Fachmanns hier keine Funktion hat und somit überflüssig ist.

Bevorzugt wird als Werkstoff für die Drahtzwischenelektroden Elektrolytkupfer verwendet, welches eine wesentlich höhere elektrische und thermische Leifähigkeit aufweist als die beim Rollennahtschweissverfahren ohne Drahtzwischenelektrode verwendeten Schweissrollenwerkstoffe. Die Leitfähigkeit von Elektrolytkupfer ist zum Beispiel etwa doppelt so gross wie diejenige des zum Schweissen von rostfreien Stählen üblicherweise verwendeten Schweissrollenwerkstoffes aus einer Legierung von Kupfer, Kobalt und Berillium. Die bessere thermische Leitfähigkeit bewirkt eine wesentlich bessere Wärmeabführung aus der Blechoberfläche. Es scheint, dass dadurch die Gefahr des Durchbrennens der Folien reduziert wird. Die bei Elektrolytkupfer wesentlich tiefere Streckgrenze bzw. Härte, welche zum Beispiel nur ca. ein Drittel des Wertes für CuCoBe-Legierungen beträgt, bewirkt eine Verformung der Oberfläche der Drahtzwischenelektrode durch die Schweisskraft und damit eine wesentlich bessere Anpassung der Stromkontaktfläche an die Oberflächenstruktur der Metallfolie und dadurch eine Reduktion des Übergangswiderstandes zwischen Elektrodenkontaktfläche und Blechoberfläche sowie eine gleichmässigere Stromdichte über einen besser zu definierenden Bereich in den Folien, was nach ersten Untersuchungen der Anmelderin dazu beiträgt, die Aufheizung der Folienoberfläche zu vermindern, so dass das Durchbrennen der Folie verzögert auftritt.

Die Schweissgeschwindigkeit als solche wird begrenzt durch die Schweissfrequenz, welche den Abstand der sich überlappenden Schweisslinsen bestimmt. Ein weiterer Faktor ist, wie erwähnt, die Kühlung der Folienoberflächen, welche das Durchbrennen der Schweisslinsen gegen aussen verlangsamt. Da die Kühlung der Oberfläche durch die erfindungsgemäss eingesetzen Drahtzwischenelektroden aufgrund der bei Folien herrschenden geometrischen Verhältnisse wesentlich verbessert werden kann, ist es möglich, die Schweissfrequenz zwecks Erreichung höherer Schweissgeschwindigkeiten anzuheben. So werden z.B. mit Schweissfrequenzen von 300-400 Hz Schweissgeschwindigkeiten von 15-20 m/min erreicht.

Die Wirksamkeit des Verfahrens wird bevorzugt noch dadurch erhöht, dass der Metalldraht vor dem Abrollen auf der Folie mikroprofiliert wird. Beispielsweise kann dies mit einem einfachen Schleifpapier geschehen, wodurch dem Draht Längsrillen eingeformt werden. Diese Längsrillen haben wahrscheinlich den Vorteil, dass für die Berührung mit der Metallfolie eine grössere Oberfläche zur Verfügung steht, wodurch wiederum die Wärmeleitfähigkeit aber auch die Stromleitfähigkeit verbessert wird.

Kreuzen sich die Schweissnähte an einem Ort, wo die Folien miteinander zu verbinden sind, droht, je dünner die Folien sind, vermehrt ein Durchbrennen. Dieses lässt sich überraschenderweise dadurch vermindern, dass eine Oxydation der zu überschweissenden vorbestehenden Naht verhindert oder vor der Ueberschweissung beseitigt wird. Nach ersten Untersuchungen der Anmelderin wirkt die widerstandserhöhende Oxydschicht bei der Ueberschweissung einer vorbestehnden Nacht durch eine weitere, kreuzende Naht derart auf den Schweissprozess ein, dass dieser gestört wird und die Kreuzungsstelle durchbrennt.

Derartige Metallfolien, die zu einer Metallhülle geformt werden, indem ihre Randbereiche allseits miteinander verbunden werden, können beispielsweise zur Herstellung eines Isolierelementes dienen, welches für die Auskleidung von Kühlschränken Anwendung finden soll. Noch heute erfolgt eine Kühlschrankauskleidung mit Isolierstoff durch das Einbringen von Styropor oder durch Ausschäumen mit Polyurethan. Vor allem letzteres ist aus Umweltschutzgründen nicht wünschenswert. Deshalb werden heute vermehrt Glasfaserplatten angewandt, welche in einer Metallhülle stecken, die durch Schweissen hermetisch versiegelt und nachträglich evakuiert werden. Sie weisen eine verbesserte Isolationswirkung auf bei geringerer Dicke, so dass für den eigentlichen Kühlschrank bzw. den Kühlraum mehr Platz zur Verfügung steht. Das Vakuum dieser Isolierelemente muss aber zumindest 10 Jahre erhalten bleiben. Mit dem erfindungsgemässen Verfahren können derartige Isolierelemente auf kostengünstige Weise hergestellt werden, wobei vor allem die Schweissnaht absolut dicht, das heisst, auch vakuumdicht ist.

Eine entsprechende Vorrichtung zum Verbinden von zwei Metallfolien, die zumindest teilweise, z.B. in Randbereichen, aufeinanderliegen, weist zwei Metalldrähte auf, welche jeweils um eine Schweissrolle geführt sind und zwischen denen die zwei Metallfolien verschweisst werden, wobei die Metalldrähte über die Metallfolien abrollen. Bevorzugt soll zumindest einer Rolle eine Einrichtung zum Mikroprofilieren des Metalldrahtes vorgeschaltet sein, wobei diese Einrichtung der Einfachheit halber aus einem Schleifpapier bestehen kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 einen Querschnitt durch ein Isolierelement, insbesondere zur Verwendung bei der Kühlschrankisolierung;
Fig 2 eine Draufsicht auf das Isolierelement gemäss Fig. 1;
Fig 3 eine schematisch dargestellte Seitenansicht eines Teils einer Vorrichtung zum Herstellen des Isolierelementes gemäss Fig. 1 und 2;
Fig. 4 einen vergrössert dargestellten Querschnitt durch einen Teil der Vorrichtung gemäss Fig. 3 in Gebrauchslage beim Herstellen eines Isolierelementes;
Fig. 5 eine Draufsicht auf den vergrössert dargestellten Ausschnitt der Vorrichtung entsprechend Fig. 4.

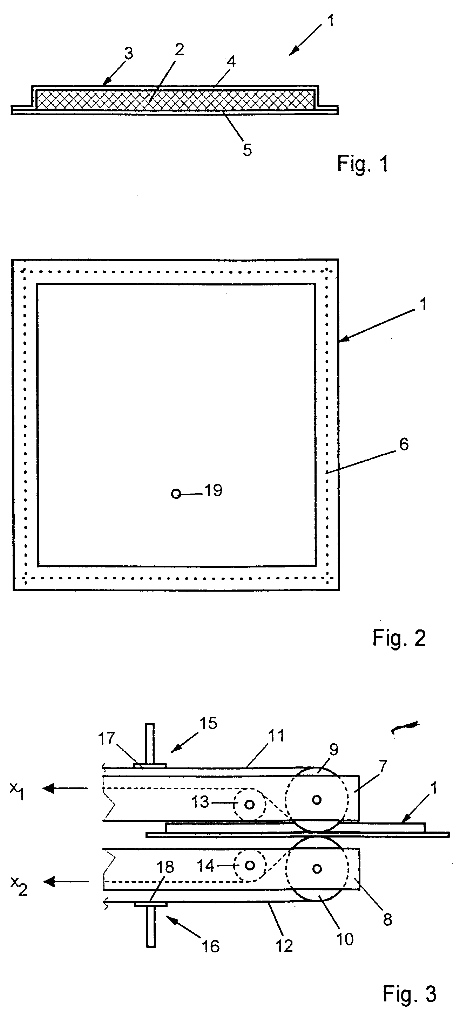

Ein Isolierelement 1 zur Verwendung bei der Kühlschrankisolierung besteht gemäss Figur 1 aus einer Glasfaserplatte 2, die von einer Metallhülle 3 umgeben ist. Dabei besteht diese Metallhülle 3 aus einer Deckfolie 4 und einer Grundfolie 5. In den Kantenbereichen liegen Deckfolie 4 und Grundfolie 5 aufeinander und sind dort über entsprechende Schweissnähte 6, die in Figur 2 nur gestrichelt angedeutet sind, miteinander verbunden.

Das Verbinden der Deckfolie 4 und der Grundfolie 5 des Isolierelementes 1 erfolgt in einer Vorrichtung, welche in Figur 3 nur teilweise angedeutet ist. Hierbei ist an einem oberen und einem unteren Tragarm 7 bzw. 8 jeweils eine Rolle 9 bzw. 10 angeordnet, welche zumindest teilweise von einem Metalldraht 11 bzw. 12 umschlungen ist. Nach der Rolle 9 bzw. 10 wird der Metalldraht 11 bzw. 12 noch über eine weitere Führungsrolle 13 bzw. 14 geführt.

Zur Erzeugung der Schweissnaht 6 im Randbereich von Deckfolie 4 und Grundfolie 5 wird das Isolierelement 1 zwischen den Rollen 9 und 10 hindurchgeführt, wobei der Metalldraht 11 bzw. 12 jeweils von einer Seite her auf der Deckfolie 4 bzw. der Grundfolie 5 abgerollt wird. Dabei werden Metalldraht 11 bzw. 12 in den Richtungen x₁ bzw. x₂ abgezogen.

Vor der Rolle 9 bzw. 10 ist dem Metalldraht 11 bzw. 12 eine Einrichtung 15 bzw. 16 zum Mikroprofilieren des Metalldrahtes 11 bzw. 12 zugeordnet. In einem einfachen Ausführungsbeispiel handelt es sich bei der Einrichtung 15 bzw. 16 zum Profilieren des Metalldrahtes 11 bzw. 12 um ein Schleifpapier 18, mit dem eine Stempelfläche 17 der Einrichtung 15 bzw. 16 belegt ist. Die Einrichtung 15 bzw. 16 zum Mikroprofilieren der Oberfläche des Metalldrahtes 11 bzw. 12 ist so angeordnet, dass die mikroprofilierte Oberfläche des Metalldrahtes auf der jeweiligen Deckfolie 4 bzw. Grundfolie 5 abrollt.

Nach dem Verbinden der Deckfolie 4 und Grundfolie 5 in den Randbereich über die Schweissnähte 6 erfolgt ein Evakuieren des Isolierelements 1 durch eine nicht näher gezeigte Öffnung in der Deckfolie 4, die im Anschluss daran mit einem Siegel 19 verschlossen wird.

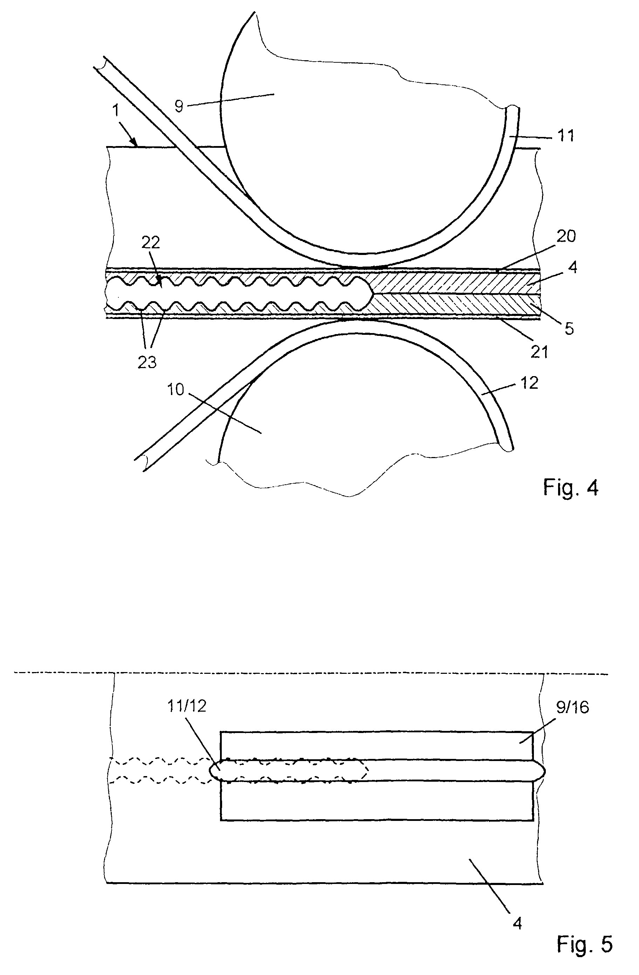

In den Figuren 4 und 5 ist der Verbindungsbereich von Deckfolie 4 und Grundfolie 5 vergrössert dargestellt. Dabei ist erkennbar, dass sowohl Deckfolie 4 als auch Grundfolie 5 eine Oxydschicht 20 bzw. 21 aufweisen sind, welche aus einer verbindung besteht, die einen höheren Schmelzpunkt aufweist als die eigentliche Folie 4 bzw. 5.

Durch die Beaufschlagung des jeweiligen Metalldrahtes 11 bzw. 12 mit Strom erfolgt ein Aufschmelzen eines Bereiches zwischen den beiden Folien 4 und 5, die in diesem Bereich durch eine Schweissnaht 22 miteinander verbunden werden. Diese Schweissnaht 22 besteht aus einzelnen Schweisslinsen 23, die infolge des Durchführens des Isolierelementes 1 durch einen Spalt 24 zwischen den Metalldrähten und der Beaufschlagung der Metalldrähte 11 bzw. 12 mit Wechselstrom entstehen.

## Patentansprüche

1. Verfahren zum Verbinden von zwei Metallfolien (4, 5), die zumindest teilweise, z.B. in Randbereichen, aufeinanderliegen, dadurch gekennzeichnet, dass die Metallfolien (4, 5) relativ zwischen zwei Metalldrähten (11, 12) hindurch geführt werden, wobei jeder Metalldraht (11, 12) auf einer Folie (4, 5) abrollt und dabei mit Strom beaufschlagt wird.

2. Verfahren nach Anspruch 1, dadurch gekennzeichnet, dass ein Metalldraht (11, 12) mit einer Festigkeit derart gewählt wird, dass er beim Abrollen auf der Folie (4, 5) verformt wird.

3. Verfahren nach Anspruch 1 oder 2, dadurch gekennzeichnet, dass der Metalldraht (11, 12) vor dem Abrollen auf der Folie (4, 5) mikroprofiliert wird.

4. Verfahren nach Anspruch 3, dadurch gekennzeichnet, dass der Metalldraht (11, 12) mit einem Bearbeitungsmittel in der Art des Schleifpapiers (18) behandelt wird.

5. Verfahren nach einem der Ansprüche 1 - 4, dadurch gekennzeichnet, dass die Metallfolie (11, 12) vor dem Verbinden mit einer Beschichtung (20, 21) auf der dem Metalldraht (4, 5) zugewandten Seite versehen wird, die den gleichen oder einen höheren Schmelzpunkt als die Metallfolie (11, 12) aufweist.

6. Verfahren nach einem der Ansprüche 1 - 5 , dadurch gekennzeichnet, dass mit den beiden Metallfolien (4, 5) ein Körper (2) umhüllt wird, wobei die den Rändern des Körpers entlanglaufende Schweissnaht sich wenigstens einmal kreuzt und mindestens die am Kreuzungspunkt vorbestehende Naht vor der Ueberschweissung durch die kreuzende Naht vorzugsweise durch Bürsten von einer Oxydschicht befreit wird.

7. Verfahren nach einem der Ansprüche 1 bis 5, dadurch gekennzeichnet, dass wenigstens die äusseren Oberflächen der Metallfolien (4, 5) während dem Schweissprozess mindestens teilweise insbesondere durch Schutzgas vor einer Oxydation geschützt werden.

8. Verfahren nach einem der Ansprüche 1 - 8, dadurch gekennzeichnet, dass die Metalldrähte (11, 12) bei der Verschweissung von Folien der Dicke 0,075 mm bis 0,1 mm mit einem Strom der Stärke 500 A bis 3000 A beaufschlagt werden.

9. Verfahren nach Anspruch 1 - 5, dadurch gekennzeichnet, dass der zum Schweissen verwendete Wechselstrom eine Frequenz aufweist, welcher von der Frequenz des Anschlussnetzes abweicht.

10. Verfahren nach Anspruch 1 - 6, dadurch gekennzeichnet, dass die Stromform des Wechselstromes eine beliebige Form aufweisen kann, die von einer Sinusform abweicht.

11. Vorrichtung zum Verbinden von zwei Metallfolien (4, 5), die zumindest teilweise, z.B. in Randbereichen, aufeinanderliegen, dadurch gekennzeichnet, dass zwei Metalldrähte (11,12) um jeweils eine Rolle (9, 10) geführt sind und zwischen sich einen Spalt für die zwei Metallfolien (4, 5) ausbilden, wobei die Metalldrähte (11, 12) auf den Metallfolien (4, 5) abrollen.

12. Vorrichtung nach Anspruch 8, dadurch gekennzeichnet, dass den Rollen (9, 10) eine Einrichtung (15, 16) zum Mikroprofilieren der Metalldrahtes (11, 12) vorgeschaltet ist.

13. Vorrichtung nach Anspruch 9, dadurch gekennzeichnet, dass die Einrichtung (15, 16) zum Mikroprofilieren des Metalldrahtes (11, 12) ein Schleifpapier (18) aufweist.

14. Vorrichtung nach einem der Ansprüche 8 bis 10, dadurch gekennzeichnet, dass sie eine Vorrichtung zur Entfernung von Oxydschichten auf der Schweissnaht und/oder eine Einrichtung zur Verhinderung von Oxydschichten wie eine Einrichtung zum Aufbringen von Schutzgas auf die Schweisstelle aufweist.
